# EUROPÄISCHE PATENTSCHRIFT

(11) **EP 4 515 614 B1**
(45) Veröffentlichungstag und Bekanntmachung des Hinweises auf die Patenterteilung: **02.09.2026**
(21) Anmeldenummer: 22813888.9
(22) Anmeldetag: 18.11.2022
(51) Int. Cl.: H01M 8/18

(54) **REDOX-FLUSSZELLE**
REDOX FLOW CELL
PILE À FLUX REDOX

(30) Priorität: 27.04.2022 DE 102022110114
(43) Veröffentlichungstag der Anmeldung: 05.03.2025
(73) Patentinhaber: Schaeffler Technologies AG & Co. KG, 91074 Herzogenaurach (DE)
(72) Erfinder: VIVEKANANTHAN, Jeevanthi, 47803 Krefeld (DE); MADRON, Milan, 90453 Nürnberg (DE); HAAG, Bertram, 91486 Uehlfeld (DE)
(74) Vertreter: Schaeffler Technologies
(86) Internationale Anmeldenummer: PCT/DE2022/100863
(87) Internationale Veröffentlichungsnummer: WO 2023/208261

(56) Entgegenhaltungen:
- GB-A- 217 465
- JP-A- 2019 164 961
- US-A1- 2017 294 658

## Beschreibung

Die Erfindung betrifft eine Redox-Flow-Zelle, insbesondere Redox-Flow-Batterie, umfassend mindestens eine Elektrode und mindestens einen Elektrolyten in Kontakt zur Elektrode, wobei die Elektrode ein Substrat umfasst, das aus mindestens einem Elektrodenmaterial in Form eines Metallblechs und/oder eines Streckmetallgitters gebildet ist.

Elektroden sowie damit ausgestattete Redox-Flusszellen oder Redox-Flow-Zellen, insbesondere Redox-Flow-Batterien oder Flussbatterien umfassend eine Mehrzahl solcher Zellen, sind hinreichend bekannt. Die Redox-Flow-Batterie ist ein Speicher für elektrische Energie, wobei die elektrische Energie in flüssigen chemischen Verbindungen beziehungsweise Elektrolyten, einem sogenannten Anolyt und einem sogenannten Katholyt, gespeichert vorliegt. Die Elektrolyte befinden sich in zwei Reaktionsräumen, die durch eine Ionenaustauschmembran voneinander getrennt sind. Über diese Membran erfolgt ein Ionenaustausch zwischen Anolyt und Katholyt, wobei elektrische Energie frei wird. Die frei werdende elektrische Energie wird über je eine Elektrode, die in Kontakt zum Anolyten und Katholyten steht, abgegriffen. Die Elektrolyte werden in den Reaktionsräumen mittels Pumpen jeweils zirkuliert und fließen an der jeweiligen zugewandten Oberfläche der Membran entlang. Da die Elektrolyte in beliebig groß ausgeführten Tanks gespeichert werden können, ist die in der Redox-Flow-Batterie gespeicherte Energiemenge nur von der Größe der verwendeten Tanks abhängig.

Flussbatteriesysteme als Speichersysteme ermöglichen eine nachhaltige Energieversorgung für stationäre und mobile Anwendungsfelder mittels erneuerbarer Energien. Um hohe Wirkungsgrade und Leistungsdichten zu erreichen, werden möglichst kompakte Zellaufbauten in Batteriestacks angestrebt. Hohe Leistungsdichten stellen jedoch große Herausforderungen an die einzelnen Komponenten eines Batteriestacks dar.

Die WO 2018/146342 A1 offenbart verschiedene Elektrolyt-Zusammensetzungen auf Lignin-Basis zur Verwendung für Redox-Flow-Batterien.

Die Veröffentlichung "A biomimetic high-capacity phenazine-based anolyte for aqueous organic redox flow batteries", Aaron Hollas et al., Nature energy, Vol. 3, Juni 2018, Seiten 508 - 514, beschreibt Anolyte für Redox-Flow-Batterien auf Basis wässriger "organischer" Elektrolyte beziehungsweise auf Basis wässriger Elektrolyte mit einer redox-aktiven organischen Spezies. Diese gewinnen zunehmend an Bedeutung.

Derzeit werden als korrosionsbeständige Substrate für Elektroden von Redox-Flusszellen oder Redox-Flow-Batterien aufgrund der Verwendung stark basischer oder saurer Elektrolyte häufig plattenförmige Komposite aus Kunststoff und Graphit verwendet. Diese Substrate sind meist mit einer beidseitig aufgebrachten Kohlenstoffbeschichtung versehen oder es ist ein durchströmbarer Kohlenstoff-Filz zwischen der Membran und der Elektrode vorhanden. Eine Gesamtplattendicke der Elektrode im Bereich von etwa 0,7 - 1,2 mm ist dabei üblich. Solche Elektroden werden häufig in einem elektrisch isolierenden Kunststoffrahmen gehalten, was mit zusätzlichem Kostenaufwand für den Rahmen und das Montageverfahren verbunden ist. Die Größe und die Herstellungserfordernisse solcher Elektroden stehen einer platzsparenden und insbesondere kompakten Geometrie von Redox-Flow-Zellen und deren rationeller industrieller Fertigung derzeit im Wege.

Zum technischen Hintergrund wird hier auf die Veröffentlichung "Engineering aspects of the design, construction and performance of modular redox flow batteries for energy storage", L.F. Arenas et al., Journal of Energy Storage 11 (2017), Seiten 119 - 153, verwiesen.

Die DE 10 2019 121 673 A1 offenbart eine Elektrodeneinheit für eine Redox-Flow-Zelle umfassend ein metallisches Substrat mit einer Beschichtung aus Titanniobkarbid und/oder Titanniobnitrid. Dabei kann zwischen dem Substrat und der Beschichtung eine metallische Haftvermittlerschicht vorgesehen sein. Weiterhin kann auf der Beschichtung eine Deckschicht aus Kohlenstoff oder einem Metallkarbid gebildet sein.

Die DE 10 2005 008 082 A1 beschreibt ein elektrisch leitendes Element für eine elektrochemische Zelle umfassend ein Metallsubstrat mit einer elektrisch leitenden Beschichtung, die von einer elektrisch leitenden Polymer-basierten Beschichtung bedeckt ist. Die elektrisch leitende Beschichtung wird bevorzugt mittels eines ionenunterstützten PVD-Verfahrens gebildet und enthält Elemente der Gruppen 4, 5, 10 oder 11, insbesondere mindestens ein Element der Gruppe umfassend Titan, Zirkonium, Vanadium, Niob, Tantal, Gold, Platin. Die Polymer-basierte Beschichtung weist bevorzugt Polymer und leitende Partikel auf. Der Auftrag der Polymer-basierten Beschichtung erfolgt bevorzugt durch Beschichten, Aufstreichen, Spritzen, Ausbreiten, Tauchen, Walzen, Laminieren oder Pulverbeschichten.

Es ist Aufgabe der Erfindung, eine Redox-Flusszelle umfassend mindestens eine Elektrode und mindestens einen Elektrolyten bereitzustellen, wobei die Elektrode bei geringen Dicken-Abmessungen kostengünstig und mit erhöhter Korrosionsbeständigkeit herzustellen ist.

Die Aufgabe wird für die Redox-Flusszelle umfassend mindestens eine Elektrode und mindestens einen Elektrolyten in Kontakt zur Elektrode, wobei die Elektrode ein Substrat umfasst, das aus mindestens einem Elektrodenmaterial in Form eines Metallblechs und/oder eines Streckmetallgitters gebildet ist, dadurch gelöst, dass das Elektrodenmaterial aus einer Kupfer-Bismut-Legierung (CuBi) gebildet ist, wobei das Substrat zumindest in seinem Kontaktbereich zum Elektrolyten von einer polymeren Deckschicht enthaltend elektrisch leitfähige Partikel umhüllt ist.

Der Einsatz eines Substrats aus einer Kupfer-Bismut-Legierung hat sich als besonders geeignet für den Einsatz in einer Redox-Flusszelle erwiesen. Einerseits ist die elektrische Leitfähigkeit hoch und bleibt über eine lange Betriebsdauer der Zelle im Bereich von mehr als 26 h stabil, da keine Korrosion festgestellt werden konnte.

Die elektrische Leitfähigkeit der polymeren Deckschicht lässt sich durch die Auswahl der elektrisch leitfähigen Partikel einstellen. Die polymere Deckschicht ist dabei flüssigkeitsdicht oder weitgehend flüssigkeitsdicht ausführbar und wird durch den anströmenden Elektrolyten über lange Zeiträume nicht abgetragen oder beschädigt.

Die Kupfer-Bismut-Legierung ist bevorzugt umfassend bis zu 10 Gew.-% Bismut ausgebildet.

Je nach Dimension einer Elektrode ist es vorteilhaft, zur Sicherstellung der mechanischen Stabilität der Elektrode mit zunehmender Fläche der Kontaktbereiche zum Elektrolyten auch die Dicke der Elektrode zu erhöhen. So sind für Elektroden prinzipiell Metallbleche und Streckmetallgitter ab einer Dicke von 0,1 mm verwendbar. Es hat sich aber bewährt, wenn das Metallblech und das Streckmetallgitter jeweils in einer Dicke von maximal 5 mm ausgebildet ist.

In einer bevorzugten Ausführungsform der Elektrode weist das Metallblech und/oder das Streckmetallgitter zumindest bereichsweise eine dreidimensionale Profilierung auf. Dies erhöht die später zur Verfügung stehende Kontaktfläche des Metallblechs oder Streckmetallgitters zu einem Elektrolyten.

Das Substrat kann lediglich ein Metallblech, lediglich ein Streckmetallgitter (gegebenenfalls in Kombination mit einer elektrisch leitenden, nicht von Elektrolyt durchdringbaren Stützplatte, oder eine Kombination von Metallblech und Streckmetallgitter umfassen. Sofern nur ein Streckmetallgitter vorgesehen ist, das von einem Elektrolyten durchströmbar ist, kann dieses zu einem Wickel aufgerollt, in Lagen übereinander gestapelt oder einlagig vorgesehen sein.

Bei einer Kombination eines Metallblechs mit einem Streckmetallgitter wird das Streckmetallgitter dem Elektrolyten zugewandt angeordnet, wobei vorzugsweise lediglich eine Klemmung zwischen Metallblech und Streckmetallgitter erfolgt. Allerdings kann das Streckmetallgitter zur Vereinfachung einer späteren Montage der Elektrode in einer Redox-Flow-Zelle auch über einzelne Schweißpunkte an dem Metallblech angeheftet oder stellenweise mit dem Metallblech verklebt oder verlötet sein.

Bevorzugt weist das Substrat einseitig oder vorzugsweise beidseitig zumindest bereichsweise eine dreidimensionale Profilierung unter Ausbildung eines Flussfeldes auf. Die Einbringung eines solches Flussfeldes in ein Substrat ist durch Prägen oder dergleichen in kostengünstiger Weise möglich. Ein solches Flussfeld lenkt die Strömung des Elektrolyten in definierte Bahnen und ist gleichbedeutend mit einer dreidimensionalen Struktur im Bereich der Oberfläche des Substrats. Es sorgt für eine homogene Verteilung und Strömung des Elektrolyten an und entlang einer Ionenaustauschmembran.

Weiterhin ist bevorzugt mindestens eine Zwischenschicht, welche zwischen dem Substrat und der Deckschicht aufgebracht ist, vorhanden, wobei die Zwischenschichtgebildet ist aus
- Kohlenstoff oder
- einem Metallkarbid oder
- mindestens einem Material aus der Gruppe umfassend Titan, Hafnium, Niob, Tantal, Zirkonium, oder
- mindestens einem Material aus der Gruppe umfassend Titan, Hafnium, Niob, Tantal, Zirkonium, und weiterhin mindestens einem nicht-metallischen Element der Gruppe umfassend, N, C, F, B, O, H.

Die mindestens eine Zwischenschicht soll die Haftung der Deckschicht am Substrat verbessern und zudem die chemische Stabilität der Elektrode und deren Lebensdauer signifikant verlängern.

Die elektrisch leitfähigen Partikel in der polymeren Deckschicht sind bevorzugt aus Kohlenstoff und/oder mindestens einem Metall und/oder mindestens einem Metallkarbid und/oder mindestens einem Metallnitrid und/oder Bornitrid gebildet. Insbesondere liegen die elektrisch leitfähigen Partikel aus dem mindestens einen Metall in Form von Titan und/oder Kupfer und/oder Silizium und/oder Aluminium und/oder Eisen und/oder Zink und/oder Zinn und/oder Gold und/oder Silber vor.

Die Deckschicht weist in einer bevorzugten Ausführungsform mindestens ein Polymer in Form von Polypropylen (PP), Polyethylen (PE), Polyamid (PA), Polyvinylchlorid (PVC), Polyphenylensulfid (PPS), Polyvinylidenfluorid (PVDF), Poly(3,4)-ethylenedioxythiophene (PEDOT), Polyetheretherketone (PEEK), Phenazin Derivaten oder Chinonen auf.

Die Zwischenschicht weist bevorzugt eine Schichtdicke im Bereich von 0,1 bis 500 µm auf.

Die Zwischenschicht ist vorzugsweise mittels eines PVD-Verfahrens oder eines kombinierten PVD/PACVD-Verfahrens auf dem Substrat gebildet. Dabei ist es von Vorteil, wenn die Zwischenschicht möglichst porenfrei abgeschieden ist oder zumindest nur Poren mit einem Durchmesser kleiner 0,1 mm aufweist, um einen korrosiven Angriff des Elektrolyten auf das Substrat weiter zu verringern. Die Zwischenschicht kann aber auch durch ein alternatives Beschichtungsverfahren, beispielsweise ein CVD-, PACVD- oder PVD-Verfahren, chemische oder elektrochemische Abscheidung oder durch thermisches Spritzen, aufgebracht werden. Im Fall der Verwendung von Dünnschichtauftragsverfahren sind Schichtdicken der Zwischenschicht insbesondere im Bereich von 200 bis 1600 nm, insbesondere im Bereich von 200 bis 800 nm bevorzugt. Nach der Bildung der mindestens einen Zwischenschicht kann ein Wärmebehandlungsschritt erfolgen.

Die Zwischenschicht kann weiterhin in Form einer Plattierung vorliegen, sofern diese metallisch ausgebildet wird. Als Plattieren bezeichnet man in der Metallbearbeitung das ein- bzw. zweiseitige Aufbringen einer oder mehrerer Metalllage(n) auf ein dazu unterschiedliches Grundmetall. Dabei wird eine untrennbare Verbindung durch Druck und/oder Temperatur bzw. nachfolgende Wärmebehandlung (z. B. Diffusionsglühen) erzielt. Das Plattieren kann insbesondere durch ein Aufwalzen von dünner Metallfolie erfolgen.

Insbesondere hat es sich bewährt, wenn die Elektrode aus einem Metallblech gebildet wird, die ein- oder beidseitig mit einer Zwischenschicht versehen wird, die durch Plattieren ausgebildet wird.

Die polymere Deckschicht weist bevorzugt eine Schichtdicke D > 500 nm auf. Die Deckschicht wird bevorzugt durch ein Sprühverfahren, ein Aufrakeln oder ein Aufschleudern ausgebildet. Nach der Bildung der Deckschicht kann ein Wärmebehandlungsschritt erfolgen.

Es hat sich bewährt, wenn die optionale mindestens eine Zwischenschicht und/oder die Deckschicht das Substrat zumindest einseitig, bevorzugt beid- oder allseitig bedeckt/bedecken. Insbesondere im Bereich der Kanten eines Metallblechs können unbeschichtete Bereiche oder Bereiche mit sehr geringer Schichtdicke vorliegen, die allerdings üblicherweise aufgrund der Trennung der Elektrolyträume nicht in Kontakt mit einem Elektrolyten stehen und daher unkritisch sind. Zumindest sollte die optionale mindestens eine Zwischenschicht und die Deckschicht das Substrat in einem Kontaktbereich zu einem Elektrolyten der Redox-Flusszelle bedecken, also in einem Bereich, der in direktem Kontakt zu einem Anolyten oder Katholyten eingesetzt wird.

Die Redox-Fllusszelle umfasst vorzugsweise mindestens zwei Elektroden, einen ersten Reaktionsraum zur Aufnahme eines ersten Elektrolyten und einen zweiten Reaktionsraum zur Aufnahme eines zweiten Elektrolyten, wobei jeder Reaktionsraum in Kontakt mit einer der Elektroden steht und wobei die Reaktionsräume durch eine lonenaustauschmembran voneinander getrennt sind.

Der Einsatz einer Elektrode mit metallischem Substrat, hier aus einer Kupfer-Bismut-Legierung, ermöglicht geringe Abstände zur Ionenaustauschmembran und damit einen platzsparenden Aufbau einer Redox-Flusszelle.

Die Elektrode gewährleistet bevorzugt eine einwandfreie Trennung der Reaktionsräume innerhalb einer Redox-Flusszelle. Gleichzeitig weisen derartige Elektroden Oberflächen auf, die neben den hohen Anforderungen an die elektrochemische Stabilität auch den Forderungen nach einem niedrigen Grenzflächenwiderstand sowie hoher katalytischer Aktivität gerecht werden.

Insbesondere Flussbatterien mit wässrigen Elektrolyten umfassend eine redox-aktive Spezies auf der Anolyt-Seite sind bevorzugte Anwendungen für die beschriebene Elektrode.

Mehrere erfindungsgemäße Redox-Flusszellen bilden insbesondere die Bestandteile einer Redox-Flow-Batterie. Dazu werden die Redox-Flusszellen elektrisch und fluidtechnisch miteinander verschaltet.

Es können aufgrund der geringen möglichen Dicken der Elektroden kleinbauende Redox-Flow-Batterien hergestellt werden, die zudem einen geringen Herstellungspreis aufweisen. So werden zur Ausbildung einer Redox-Flow-Batterie bevorzugt mehr als 10, insbesondere mehr als 50 Redox-Flusszellen elektrisch miteinander verschaltet eingesetzt.

Als für eine Redox-Flusszelle oder eine Redox-Flow-Batterie geeigneter Anolyt wird hier beispielhaft genannt:
1.4 M 7,8-Dihydroxyphenazin-2-sulfonsäure (kurz: DHPS)
gelöst in 1 molarer Natronlauge

Als für eine Redox-Flusszelle oder eine Redox-Flow-Batterie geeigneter Katholyt wird hier beispielhaft genannt:
0.31 M Kaliumhexacyanoferrat(II) und 0.31 M Kaliumhexacyanoferrat(III)
gelöst in 2 molarer Natronlauge.

Es werden bevorzugt Elektrolyt-Kombinationen mit wässrigen Elektrolyten mit einer redox-aktiven organischen Spezies auf der Anolyt-Seite zur Bildung einer Redox-Flusszelle oder einer Redox-Flow-Batterie verwendet.

Die Figuren 1 bis 6 zeigen beispielhaft Elektroden für eine Redox-Flusszelle und eine Redox-Flusszelle beziehungsweise eine Redox-Flow-Batterie. So zeigt
- Figur 1: eine Elektrode umfassend ein Substrat und eine Deckschicht in der Draufsicht auf die Substratebene,
- Figur 2: einen Querschnitt durch die Elektrode gemäße Figur 1,
- Figur 3: einen Querschnitt durch eine Elektrode mit einer Profilierung,
- Figur 4: einen Querschnitt durch eine Elektrode umfassend ein Substrat aus einem Metallblech und einem Streckmetallgitter,
- Figur 5: eine Elektrode mit einem Flussfeld, und
- Figur 6: eine Redox-Flusszelle beziehungsweise eine Redox-Flow-Batterie mit einer Redox-Flusszelle.

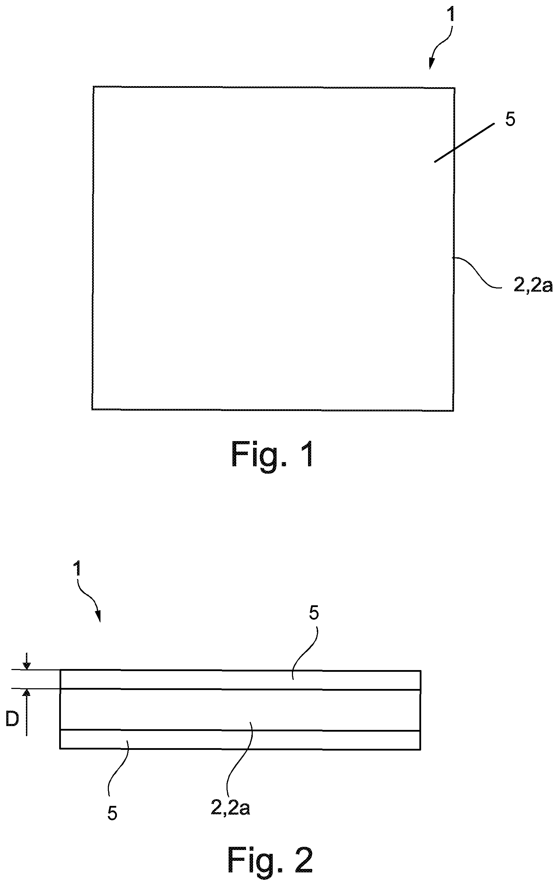

Figur 1 zeigt eine Elektrode 1 umfassend ein Substrat 2 in der Draufsicht auf die Substratebene. Das Substrat 2 ist hier aus einem Metallblech 2a in einer Dicke kleiner 0,5 mm gebildet. Das Metallblech 2a ist aus einer Kupfer-Bismut-Legierung mit einem Bismut-Gehalt von 5 Gew.-% gebildet. Auf dem Substrat 2 befindet sich eine polymere Deckschicht 5 enthaltend elektrisch leitende Partikel aus Titan in einer polymeren Matrix aus PVC.

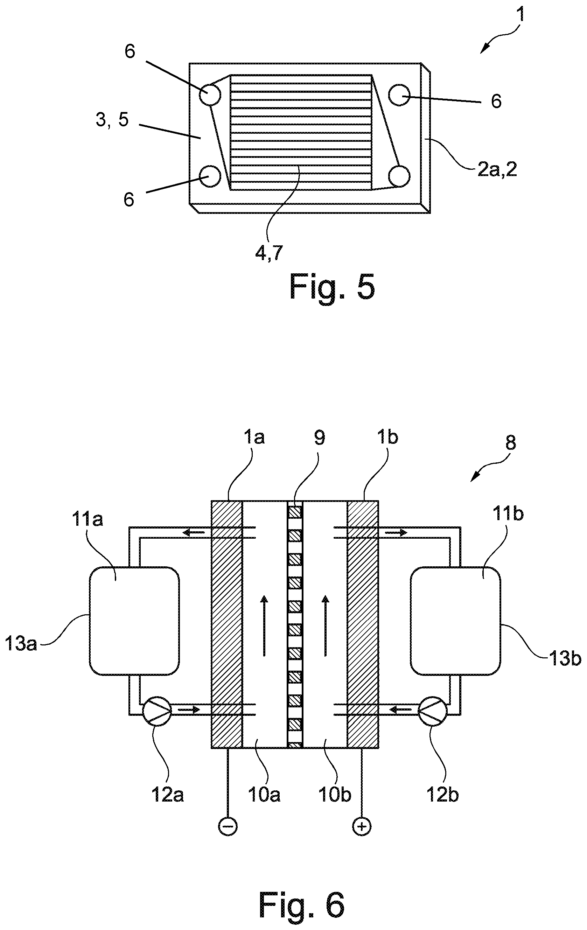

Figur 2 zeigt einen Querschnitt durch die Elektrode 1 gemäß Figur 1 umfassend das Substrat 2 in Form des Metallblechs 2a aus der Kupfer-Bismut-Legierung, das beidseitig die polymere Deckschicht 5 aufweist. Dabei kann die Deckschicht 5 aber auch nur auf einer Seite des Metallblechs 2a aufgebracht sein, wobei die Deckschicht 5 das Substrat 2 zumindest in einem Kontaktbereich zu einem Elektrolyten der Redox-Flusszelle 8 bedecken soll (vergleiche Figur 6). Die polymere Deckschicht 5 weist hier eine Schichtdicke D von 700 nm auf.

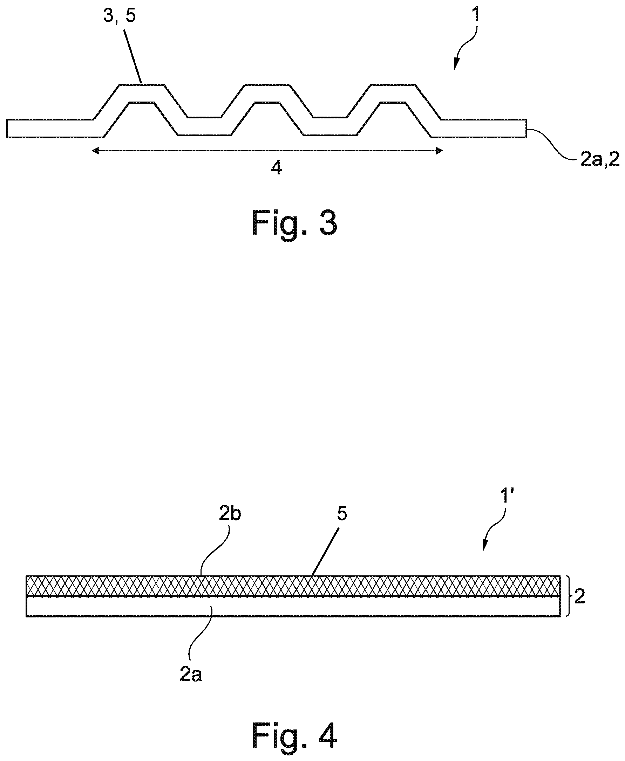

Figur 3 zeigt einen Querschnitt durch eine Elektrode 1 umfassend ein Substrat 2 in Form eines Metallblechs 2a aus einer Kupfer-Bismut-Legierung. Das Metallblech 2a weist eine dreidimensionale Profilierung 4 auf, die die spätere Kontaktfläche des Metallblechs 2a zu einem Elektrolyten erhöht. Das Substrat 2 ist allseitig mit einer Zwischenschicht 3 aus Titan (Schichtdicke im Bereich von 200 bis 800 nm) und darauf einer polymeren Deckschicht 5 (Schichtdicke 1 µm) bedeckt, die hier aufgrund der geringen Schichtdicken nicht im Detail gezeigt sind. Die Deckschicht 5 weist hier Partikel aus Niob auf

Figur 4 zeigt einen Querschnitt durch eine Elektrode 1' umfassend ein Substrat 2, das ein Metallblech 2a und ein Streckmetallgitter 2b aus einer Kupfer-Bismut-Lagierung umfasst. Das Metallblech 2a und das Streckmetallgitter 2b sind von einer polymeren Deckschicht 5 bedeckt.

Figur 5 zeigt eine Elektrode 1 in dreidimensionaler Ansicht umfassend ein Substrat 2 in Form eines Metallblechs 2a mit einer Profilierung 4, die ein Flussfeld 7 ausbildet und mit Öffnungen 6 für einen Zu- und Abfluss von Elektrolyt. In dem Substrat 2 ist beidseitig die Profilierung 4 zur Ausbildung jeweils eines Flussfeldes 7 vorhanden, so dass eine dreidimensionale Strukturierung der Oberfläche der Elektrode 1 resultiert, die in einer Redox-Flow-Zelle von einem Elektrolyten angeströmt werden soll. Das Substrat 2 ist beidseitig mit einer Zwischenschicht 3 und die Zwischenschicht 3 mit der polymeren Deckschicht 5 bedeckt.

Figur 6 zeigt eine Redox-Flusszelle 8 beziehungsweise eine Redox-Flow-Batterie mit einer Redox-Flusszelle 8. Die Redox-Flusszelle 8 umfasst zwei Elektroden 1a, 1b, einen ersten Reaktionsraum 10a und einen zweiten Reaktionsraum 10b, wobei jeder Reaktionsraum 10a, 10b in Kontakt mit einer der Elektroden 1a, 1b steht. Die Reaktionsräume 10a, 10b sind durch eine Ionenaustauschmembran 9 voneinander getrennt. Ein flüssiger erster Eelektrolyt, hier Anolyt 11a, wird aus einem Tank 13a über eine Pumpe 12a in den ersten Reaktionsraum 10a gepumpt und zwischen der Elektrode 1a und der Ionenaustauschmembran 9 hindurchgeführt. Ein flüssiger zweiter Elektrolyt, hier Katholyt 11b, wird aus einem Tank 13b über eine Pumpe 12b in den zweiten Reaktionsraum 10b gepumpt und zwischen der Elektrode 1b und der Ionenaustauschmembran 9 hindurchgeführt. Es erfolgt ein Ionentausch über die Ionenaustauschmembran 9 hinweg, wobei aufgrund der Redox-Reaktion an den Elektroden 1a, 1b elektrische Energie frei wird.

### Bezugszeichenliste

- 1, 1', 1a, 1b: Elektrode
- 2: Substrat
- 2a: Metallblech
- 2b: Streckmetallgitter
- 3: Zwischenschicht
- 4: Profilierung
- 5: Deckschicht
- 6: Öffnungen für Zu- und Abfluss von Elektrolyt
- 7: Flussfeld
- 8: Redox-Flusszelle oder Redox-Flow-Batterie
- 9: Polymerelektrolytmembran
- 10a: erster Reaktionsraum
- 10b: zweiter Reaktionsraum
- 11a: Anolyt
- 11b: Katholyt
- 12a, 12b: Pumpe
- 13a, 13b: Tank
- D: Dicke der Deckschicht

## Patentansprüche

1. Redox-Flusszelle (8), umfassend mindestens eine Elektrode (1, 1', 1a, 1b) und einen Elektrolyten in Kontakt zur Elektrode(1, 1', 1a, 1b), wobei die Elektrode (1, 1', 1a, 1b) ein Substrat (2) umfasst, das aus mindestens einem Elektrodenmaterial in Form eines Metallblechs (2a) und/oder eines Streckmetallgitters (2b) gebildet ist, **dadurch gekennzeichnet, dass** das Elektrodenmaterial aus einer Kupfer-Bismut-Legierung (CuBi) gebildet ist, wobei das Substrat (2) zumindest in seinem Kontaktbereich zum Elektrolyten von einer polymeren Deckschicht (5) enthaltend elektrisch leitfähige Partikel umhüllt ist.

2. Redox-Flusszelle (8) nach Anspruch 1, **dadurch gekennzeichnet, dass** die Kupfer-Bismut-Legierung umfassend bis zu 10 Gew.-% Bismut ausgebildet ist.

3. Redox-Flusszelle (8) nach einem der Ansprüche 1 oder 2, **dadurch gekennzeichnet, dass** das Metallblech (2a) und/oder das Streckmetallgitter (2b) jeweils in einer Dicke von maximal 5 mm ausgebildet ist.

4. Redox-Flusszelle (8) nach einem der Ansprüche 1 bis 3, **dadurch gekennzeichnet, dass** das Metallblech (2a) und/oder das Streckmetallgitter (2b) zumindest bereichsweise eine dreidimensionale Profilierung (4) aufweist.

5. Redox-Flusszelle (8) nach einem der Ansprüche 1 bis 4, **dadurch gekennzeichnet, dass** diese weiterhin mindestens eine Zwischenschicht (3) umfasst, welche zwischen dem Substrat (2) und der Deckschicht (5) aufgebracht ist, wobei die Zwischenschicht (3) gebildet ist aus
- Kohlenstoff oder
- einem Metallkarbid oder
- mindestens einem Material aus der Gruppe umfassend Titan, Hafnium, Niob, Tantal, Zirkonium, oder
- mindestens einem Material aus der Gruppe umfassend Titan, Hafnium, Niob, Tantal, Zirkonium, und weiterhin mindestens einem nicht-metallischen Element der Gruppe umfassend, N, C, F, B, O, H.

6. Redox-Flusszelle (8) nach einem der Ansprüche 1 bis 5, **dadurch gekennzeichnet, dass** die elektrisch leitfähigen Partikel in der Deckschicht (5) aus Kohlenstoff und/oder mindestens einem Metall und/oder mindestens einem Metallkarbid und/oder mindestens einem Metallnitrid und/oder Bornitrid gebildet sind.

7. Redox-Flusszelle (8) nach Anspruch 6, **dadurch gekennzeichnet, dass** die elektrisch leitfähigen Partikel aus dem mindestens einen Metall in Form von Titan und/oder Kupfer und/oder Silizium und/oder Aluminium und/oder Eisen und/oder Zink und/oder Zinn und/oder Gold und/oder Silber vorliegen.

8. Redox-Flusszelle (8) nach einem der Ansprüche 1 bis 6, **dadurch gekennzeichnet, dass** die Deckschicht (5) mindestens ein Polymer in Form von Polypropylen (PP), Polyethylen (PE), Polyamid (PA), Polyvinylchlorid (PVC), Polyphenylensulfid (PPS), Polyvinylidenfluorid (PVDF), Poly(3,4)-ethylenedioxythiophene (PEDOT), Polyetheretherketone (PEEK), Phenazin Derivaten oder Chinonen aufweist.

9. Redox-Flusszelle (8) nach einem der Ansprüche 1 bis 8, **dadurch gekennzeichnet, dass** die Zwischenschicht (3) eine Schichtdicke im Bereich von 0,1 bis 500 µm aufweist und/oder dass die Deckschicht (5) eine Schichtdicke (D) > 500 nm aufweist.

10. Redox-Flusszelle (8) nach einem der Ansprüche 1 bis 9, umfassend mindestens zwei Elektroden (1a, 1b), einen ersten Reaktionsraum (10a) zur Aufnahme eines ersten Elektrolyten und einen zweiten Reaktionsraum (10b) zur Aufnahme eines zweiten Elektrolyten, wobei jeder Reaktionsraum (10a, 10b) in Kontakt mit einer der Elektroden (1a, 1b) steht und wobei die Reaktionsräume (10a, 10b) durch eine Ionenaustauschmembran (9) voneinander getrennt sind.

## Claims

1. A redox flow cell (8) comprising at least one electrode (1, 1', 1a, 1b) and an electrolyte in contact with the electrode (1, 1', 1a, 1b), wherein the electrode (1, 1', 1a, 1b) comprises a substrate (2) formed from at least one electrode material in the form of a metal sheet (2a) and/or an expanded metal mesh (2b), **characterised in that** the electrode material is formed from a copper-bismuth alloy (CuBi), wherein the substrate (2) is coated, at least in its contact area with the electrolyte, by a polymeric cover layer (5) containing electrically conductive particles.

2. The redox flow cell (8) according to claim 1, **characterised in that** the copper-bismuth alloy comprises up to 10 wt.% bismuth.

3. The redox flow cell (8) according to either one of claims 1 or 2, **characterised in that** the metal sheet (2a) and/or the expanded metal mesh (2b) are each formed with a thickness of a maximum of 5 mm.

4. The redox flow cell (8) according to any one of claims 1 to 3, **characterised in that** the metal sheet (2a) and/or the expanded metal mesh (2b) have, at least in sections, a three-dimensional profile (4).

5. The redox flow cell (8) according to any one of claims 1 to 4, **characterised in that** it further comprises at least one intermediate layer (3), which is applied between the substrate (2) and the cover layer (5), wherein the intermediate layer (3) is formed from
- carbon or
- a metal carbide or
- at least one material from the group comprising titanium, hafnium, niobium, tantalum, zirconium, or
- at least one material from the group comprising titanium, hafnium, niobium, tantalum, zirconium, and further comprising at least one non-metallic element from the group comprising N, C, F, B, O, H.

6. The redox flow cell (8) according to any one of claims 1 to 5, **characterised in that** the electrically conductive particles in the cover layer (5) are formed from carbon and/or at least one metal and/or at least one metal carbide and/or at least one metal nitride and/or boron nitride.

7. The redox flow cell (8) according to claim 6, **characterised in that** the electrically conductive particles are made of the at least one metal in the form of titanium and/or copper and/or silicon and/or aluminium and/or iron and/or zinc and/or tin and/or gold and/or silver.

8. The redox flow cell (8) according to any one of claims 1 to 6, **characterised in that** the cover layer (5) has at least one polymer in the form of polypropylene (PP), polyethylene (PE), polyamide (PA), polyvinyl chloride (PVC), polyphenylene sulphide (PPS), polyvinylidene fluoride (PVDF), poly(3,4)-ethylenedioxythiophene (PEDOT), polyetheretherketone (PEEK), phenazine derivatives or quinones.

9. The redox flow cell (8) according to any one of claims 1 to 8, **characterised in that** the intermediate layer (3) has a layer thickness in the range of 0.1 to 500 µm and/or **in that** the cover layer (5) has a layer thickness (D) > 500 nm.

10. The redox flow cell (8) according to any of claims 1 to 9, comprising at least two electrodes (1a, 1b), a first reaction chamber (10a) for containing a first electrolyte, and a second reaction chamber (10b) for containing a second electrolyte, wherein each of the reaction chambers (10a, 10b) is in contact with one of the electrodes (1a, 1b) and wherein the reaction chambers (10a, 10b) are separated from one another by an ion-exchange membrane (9).

## Revendications

1. Pile à flux redox (8) comprenant au moins une électrode (1, 1', 1a, 1b) et un électrolyte en contact avec l'électrode (1, 1', 1a, 1b), dans laquelle l'électrode (1, 1', 1a, 1b) comprend un substrat (2), qui est formé d'au moins un matériau d'électrode sous la forme d'une tôle (2a) et/ou d'un treillis métallique déployé (2b), **caractérisée en ce que** le matériau d'électrode est formé d'un alliage cuivre-bismuth (CuBi), dans laquelle le substrat (2) est enveloppé au moins dans sa zone de contact avec l'électrolyte par une couche de recouvrement polymère (5) contenant des particules électroconductrices.

2. Pile à flux redox (8) selon la revendication 1, **caractérisée en ce que** l'alliage cuivre-bismuth contient jusqu'à 10 % en poids de bismuth.

3. Pile à flux redox (8) selon l'une des revendications 1 ou 2, **caractérisée en ce que** la tôle (2a) et/ou le treillis métallique déployé (2b) sont réalisés respectivement dans une épaisseur 5 mm maximum.

4. Pile à flux redox (8) selon l'une des revendications 1 à 3, **caractérisée en ce que** la tôle (2a) et/ou le treillis métallique déployé (2b) présentent au moins à certains endroits un profilage tridimensionnel (4).

5. Pile à flux redox (8) selon l'une des revendications 1 à 4, **caractérisée en ce qu'**elle comprend en outre au moins une couche intermédiaire (3), laquelle est appliquée entre le substrat (2) et la couche de recouvrement (5), la couche intermédiaire (3) étant constituée de
- carbone ou
- d'un carbure métallique ou
- d'au moins un matériau du groupe comprenant le titane, le hafnium, le niobium, le tantale, le zirconium ou
- d'au moins un matériau du groupe comprenant le titane, le hafnium, le niobium, le tantale, le zirconium, et comprenant en outre au moins un élément non métallique du groupe comprenant N, C, F, B, O, H.

6. Pile à flux redox (8) selon l'une des revendications 1 à 5, **caractérisée en ce que** les particules électroconductrices de la couche de recouvrement (5) sont constituées de carbone et/ou d'au moins un métal et/ou d'au moins un carbure métallique et/ou d'au moins un nitrure métallique et/ou de nitrure de bore.

7. Pile à flux redox (8) selon la revendication 6, **caractérisée en ce que** les particules électroconductrices sont constituées d'au moins un métal sous forme de titane et/ou de cuivre et/ou de silicium et/ou d'aluminium et/ou de fer et/ou de zinc et/ou d'étain et/ou d'or et/ou d'argent.

8. Pile à flux redox (8) selon l'une des revendications 1 à 6, **caractérisée en ce que** la couche de recouvrement (5) présente au moins un polymère sous la forme de polypropylène (PP), de polyéthylène (PE), de polyamide (PA), de polychlorure de vinyle (PVC), de sulfure de polyphénylène (PPS), de fluorure de polyvinylidène (PVDF), de poly(3,4)-éthylènedioxythiophène (PEDOT), de polyétheréthercétone (PEEK), de dérivés de phénazine ou quinones.

9. Pile à flux redox (8) selon l'une des revendications 1 à 8, **caractérisée en ce que** la couche intermédiaire (3) présente une épaisseur de couche dans la plage de 0,1 à 500 µm et/ou **en ce que** la couche de recouvrement (5) présente une épaisseur de couche (D) > 500 nm.

10. Pile à flux redox (8) selon l'une des revendications 1 à 9, comprenant au moins deux électrodes (1a, 1b), un premier espace de réaction (10a) pour la réception d'un premier électrolyte et un second espace de réaction (10b) pour la réception d'un second électrolyte, dans laquelle chaque espace de réaction (10a, 10b) est en contact avec l'une des électrodes (1a, 1b) et dans laquelle les espaces de réaction (10a, 10b) sont séparés l'un de l'autre par une membrane échangeuse d'ions (9).
